(19) **Europäisches Patentamt / European Patent Office / Office européen des brevets**

(11) **EP 4 752 176 A1**

(12) **EUROPEAN PATENT APPLICATION**
published in accordance with Art. 153(4) EPC

(43) Date of publication:
03.06.2026 Bulletin 2026/23

(21) Application number: 24864619.2

(22) Date of filing: 10.09.2024

(51) International Patent Classification (IPC):
$C09D\ 1/00^{(2006.01)}$  $C23C\ 22/00^{(2006.01)}$
$C23C\ 22/05^{(2006.01)}$  $C23C\ 22/08^{(2006.01)}$

(52) Cooperative Patent Classification (CPC):
C09D 1/00; C09D 5/08; C09D 7/61; C22C 38/02;
C22C 38/04; C22C 38/06; C23C 22/00;
C23C 22/05; C23C 22/08

(86) International application number:
PCT/CN2024/118028

(87) International publication number:
WO 2025/055903 (20.03.2025 Gazette 2025/12)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 11.09.2023 CN 202311161043

(71) Applicant: BAOSHAN IRON & STEEL CO., LTD.
Shanghai 201900 (CN)

(72) Inventors:
• JI, Yaming
  Shanghai 201900 (CN)
• LI, Guobao
  Shanghai 201900 (CN)

• YANG, Yongjie
  Shanghai 201900 (CN)
• ZHAO, Zipeng
  Shanghai 201900 (CN)
• MA, Changsong
  Shanghai 201900 (CN)
• LING, Chen
  Shanghai 201900 (CN)
• WU, Meihong
  Shanghai 201900 (CN)
• GUO, Jianguo
  Shanghai 201900 (CN)

(74) Representative: Maiwald GmbH
Elisenhof
Elisenstraße 3
80335 München (DE)

(54) **COATING SOLUTION FOR ORIENTED SILICON STEEL, AND ORIENTED SILICON STEEL PLATE AND MANUFACTURING METHOD THEREFOR**

(57) A coating solution for oriented silicon steel, containing a first dihydrogen phosphate, a second dihydrogen phosphate, and colloidal silica; wherein the first dihydrogen phosphate is at least one selected from dihydrogen phosphates of Al, Mg, Ca, Sr, Ba, Zn, Ni, and Mn; the second dihydrogen phosphate comprises copper dihydrogen phosphate; and the coating solution does not contain Cr. An oriented silicon steel sheet, comprising a substrate and a coating on the surface of the substrate, and the coating is formed from the coating solution described above. A method for manufacturing the oriented silicon steel sheet. The coating of the oriented silicon steel sheet exhibits excellent performances of tension, moisture absorption resistance, heat resistance, corrosion resistance, and anti-sticking property.

EP 4 752 176 A1

**Description**

TECHNICAL FIELD

The present invention relates to a coating solution, a steel sheet, and a manufacturing method therefor, in particular to a coating solution for oriented silicon steel, an oriented silicon steel sheet, and a manufacturing method therefor.

BACKGROUND ART

Oriented silicon steel sheets refer to electromagnetic steel sheets containing silicon in the steel and having a crystal grain easy magnetization axis (100) <001> aligned substantially with the rolling direction. Oriented silicon steel sheets are primarily used in the manufacture of transformer iron cores. Their magnetic properties along the rolling direction are exceptionally excellent, making them crucial soft magnetic materials. When oriented silicon steel sheets are used as material for the manufacture of transformer iron cores, energy loss and noise level of the transformers can be effectively reduced.

Imparting high tension to oriented silicon steel by surface coating is a crucial technical means for enhancing the performances of the oriented silicon steel. In prior arts, the surface coating of the oriented silicon steel sheet typically consists of a ceramic film primarily composed of forsterite ($Mg_2SiO_4$), and an insulating coating thereon. The insulating coating can serve to provide insulation, prevent rust, and improve processability.

Under normal circumstances, the surface coating of the oriented silicon steel forms at high temperatures. Due to its low coefficient of thermal expansion relative to the steel sheet, the difference in the coefficient of thermal expansion between the steel sheet and the coating imparts tension to the steel sheet when the silicon steel cools to room temperature. This tension can reduce the loss of the oriented silicon steel (reducing anomalous eddy current loss by narrowing the 180°C magnetic domain width) and magnetostriction, thereby effectively reducing energy loss and noise level of transformers.

To further improve the performance of the oriented silicon steel, numerous scientists and engineers have undertaken a lot of beneficial attempts and designed a variety of new surface coatings.

Japanese patent document titled "Method for manufacturing an insulating coating on oriented silicon steel sheets" (publication number: JP 48-39338, publication date: June 9, 1973) discloses a coating solution containing aluminum dihydrogen phosphate, colloidal silica, and chromic anhydride. When the coating solution is applied to the surface of the oriented silicon steel and is subjected to heat treatment, $MgO-P_2O_5-SiO_2$ and $Al_2O_3-P_2O_5-SiO_2$ phosphate-based glass coatings are formed on the steel sheet surface.

Chinese patent document titled "Insulative coating treatment liquid and method for manufacturing metal having insulative coating" (publication number: CN107923046A, publication date: April 17, 2018) discloses an insulating coating treatment solution comprising at least one phosphate selected from phosphates of Mg, Ca, Ba, Sr, Zn, Al, and Mn; and two or more types of colloidal silica having different average particle diameters. The tension of the insulating coating is optimized and increased by using colloidal silicas with different particle diameters. While the above technical solution can improve the coating's denseness to a certain extent by using a coating solution containing colloidal silica of different particle diameters, the extent of increase in surface tension remains limited.

Chinese patent document titled "Grain-Oriented Electrical steel sheet with coating, and method for producing same" (publication number: CN104024474A, publication date: September 3, 2014) discloses an oriented silicon steel sheet with high tensile stress and reduced iron loss imparted by forming a coating that contains elements of P, Si, Cr, and O as well as at least one element selected from Mg, Al, Ni, Co, Mn, Zn, Fe, Ca, and Ba, and that includes at least 5 wt % of phosphate crystal phase. The above technical solution increases the tension imparted by insulating coating to the steel sheet by increasing the coating's elastic modulus. However, this requires increasing the added amount of chromic anhydride and raising the coating baking temperature. The permissible range for the added amount of chromic anhydride in phosphate coatings is very narrow. When the addition of chromic anhydride exceeds a certain level, the coating exhibits cracking and clouding. Additionally, when the sintering temperature of the coating is higher than about 900°C, colloidal silica undergoes crystallization. While the formation of crystallinity within the coating can increase tension, it also reduces corrosion resistance and transparency of the coating.

It is evident that phosphate-based glass coatings impart suboptimal performances to oriented silicon steel sheets, which still have problems of insufficient tension and low heat resistance. When transformer iron cores formed from the oriented silicon steel with the phosphate-based coating undergo stress relief annealing, degradation occurs in the performances of the surface tension coating on the oriented silicon steel, leading to reduced tension. Consequently, the coating fails to effectively reduce energy loss and noise level of transformers.

SUMMARY OF THE INVENTION

One objective of the present invention is to provide a coating solution for oriented silicon steel. The coating solution is applied to an oriented silicon steel sheet to form a coating on its surface. The surface coating exhibits excellent moisture absorption resistance, tension, corrosion resistance, and anti-sticking property, thereby further enhancing the magnetic property of the oriented silicon steel.

To achieve the above objective, the present invention provides a coating solution for oriented silicon steel containing a first dihydrogen phosphate, a second dihydrogen phosphate, and colloidal silica; wherein the first dihydrogen phosphate is at least one selected from dihydrogen phosphates of Al, Mg, Ca, Sr, Ba, Zn, Ni, and Mn; the second dihydrogen phosphate comprises a dihydrogen phosphate of Cu; and the coating solution does not contain Cr.

Accordingly, the present invention further provides a coating solution for oriented silicon steel, wherein solutes of the coating solution consist of: the first dihydrogen phosphate, the second dihydrogen phosphate, and the colloidal silica; wherein the first dihydrogen phosphate is at least one selected from dihydrogen phosphates of Al, Mg, Ca, Sr, Ba, Zn, Ni, and Mn; and the second dihydrogen phosphate comprises copper dihydrogen phosphate.

The solutes in the coating solution of the present invention are: the first dihydrogen phosphate, the second dihydrogen phosphate, and the colloidal silica. The solvent is water.

The coating solution is applied onto the silicon steel substrate, and is subjected to heat treatment to form a coating. Wherein, the dihydrogen phosphates can form a phosphate coating with a network or chain-like structure on the surface of the substrate after the heat treatment. Colloidal silica serves as a filler in the coating of the present invention, forming a ceramic layer with a low thermal expansion coefficient after heat treatment, thereby providing tension to the coating. Additionally, the above coating components can improve the coating performance of the coating. During the heat treatment process, copper dihydrogen phosphate converts to Cu phosphate, serving to fix phosphate radicals and prevent free phosphate radicals from remaining in the coating, thereby increasing the moisture absorption resistance, tension, corrosion resistance, and anti-sticking property of the coating.

In the present invention, "colloidal silica" refers to an aqueous dispersion system of nanoscale silica.

Unless otherwise specified, the "content" of chemical substances in the present invention refers to mass percentage. Preferably, in the coating solution for oriented silicon steel described in the present invention, the first dihydrogen phosphate is at least one selected from dihydrogen phosphates of Al, Mg, Ca, Zn, and Mn.

More preferably, in the coating solution for oriented silicon steel described in the present invention, the first dihydrogen phosphate is at least one selected from magnesium dihydrogen phosphate, aluminum dihydrogen phosphate, calcium dihydrogen phosphate, zinc dihydrogen phosphate, and manganese dihydrogen phosphate.

Preferably, based on 100 parts by mass of the total amount of dihydrogen phosphate (i.e., the sum of the amount of the first dihydrogen phosphate and the amount of the second dihydrogen phosphate), the amount of colloidal silica in the coating solution is 50-150 parts by mass, more preferably 80-120 parts by mass. In the present invention, unless otherwise specified, the content of colloidal silica in the coating solution refers to the silica solid content.

That is, in the coating solution for oriented silicon steel described in the present invention, the mass ratio of the amount of the colloidal silica to the total amount of the first dihydrogen phosphate and the second dihydrogen phosphate is 0.5 to 1.5.

Preferably, in the coating solution for oriented silicon steel described in the present invention, the mass ratio of the amount of the colloidal silica to the total amount of the first dihydrogen phosphate and the second dihydrogen phosphate is 0.8 to 1.2.

In the present invention, the amount of colloidal silica is controlled within the above range, enabling the coating solution to achieve better coating performance.

Preferably, based on 100 parts by mass of the total amount of dihydrogen phosphate (i.e., the sum of the amount of the first dihydrogen phosphate and the amount of the second dihydrogen phosphate), the amount of copper dihydrogen phosphate in the coating solution is 5-25 parts by mass, more preferably 10-15 parts by mass.

That is, in the coating solution for oriented silicon steel described in the present invention, the mass ratio of copper dihydrogen phosphate to the total amount of the first dihydrogen phosphate and the second dihydrogen phosphate is 0.05 to 0.25.

Preferably, in the coating solution for oriented silicon steel described in the present invention, the mass ratio of copper dihydrogen phosphate to the total amount of the first dihydrogen phosphate and the second dihydrogen phosphate is 0.1 to 0.15.

In the present invention, based on 100 parts by mass of the total amount of dihydrogen phosphate, when the amount of copper dihydrogen phosphate in the coating solution is 5 parts by mass or more, the moisture absorption resistance of the coating can be significantly improved. However, when the amount of copper dihydrogen phosphate exceeds 25 parts by mass, the tension of the coating is reduced. Therefore, it is preferred to control the amount of copper dihydrogen phosphate within the above range.

Preferably, in the coating solution for oriented silicon steel coating described in the present invention, the particle diameter of the colloidal silica (i.e., colloidal particle size) is 5-50 nm, preferably 5-10 nm.

By adjusting the particle diameter of the colloidal silica, the formation of a dense ceramic layer on the substrate surface after heat treatment of the coating solution is facilitated, thereby achieving superior tension effects and coating surface morphology.

Another objective of the present invention is to provide an oriented silicon steel sheet comprising a substrate and a coating on the surface of the substrate, wherein the coating is formed from the coating solution described above, the coating has a network or chain-like structure; the coating contains a first phosphate, a second phosphate, and silica, wherein the first phosphate comprises at least one selected from phosphates of Al, Mg, Ca, Sr, Ba, Zn, Ni, and Mn; the second phosphate comprises a phosphate of Cu; and the coating does not contain Cr.

The composition of the silicon steel substrate is not particularly limited in the present invention. Commonly used oriented silicon steel substrates in the art can be used, such as oriented silicon steel substrates with Si element content of 2-4 wt%.

The thickness of the oriented silicon steel substrate is also not particularly limited in the present invention. For example, a substrate with a thickness of 0.20-0.30 mm can be used.

Preferably, in the oriented silicon steel sheet described in the present invention, the phosphates in the coating are converted from the dihydrogen phosphates in the coating solution. Therefore, the first phosphate can comprise at least one selected from phosphates of Al, Mg, Ca, Zn, and Mn.

More preferably, in the oriented silicon steel sheet described in the present invention, the first phosphate in the coating comprises at least one selected from magnesium phosphate, aluminum phosphate, calcium phosphate, zinc phosphate, and manganese phosphate.

Preferably, in the oriented silicon steel sheet described in the present invention, the amount of the first phosphate and the second phosphate accounts for 34-73% of the total mass of the coating.

Preferably, in the oriented silicon steel sheet described in the present invention, the amount of Cu element accounts for 0.8-4.0% of the total mass of the coating.

Preferably, in some embodiments, the surface of the substrate comprises a magnesium silicate underlayer, and the coating is formed on the magnesium silicate underlayer. That is, a magnesium silicate layer and the coating of the present invention are sequentially formed on the surface of the substrate.

Preferably, in the oriented silicon steel sheet described in the present invention, the coating satisfies the following performances: coating tension > 6 MPa; phosphorus release amount < 75 $\mu$g/150 cm$^2$. In the present invention, the phosphorus release amount is used to characterize the moisture absorption resistance of the coating.

Preferably, in the oriented silicon steel sheet described in the present invention, the dry film amount per side of the coating is 2-7 g/m$^2$.

In the present invention, if the dry film amount per side of the coating is below 2 g/m$^2$, the coating fails to provide sufficient tension. If the dry film weight per side is higher than 7 g/m$^2$, the coating solution applied to the surface of the substrate is excessive, resulting in non-uniform coating thickness obtained after heat treatment. This can easily lead to a reduction in the lamination factor of the steel sheet.

Another objective of the present invention is to provide a manufacturing method for the above oriented silicon steel sheet, by which the above oriented silicon steel sheet can be effectively produced.

To achieve the above objective, the present invention provides a method for manufacturing the oriented silicon steel sheet, comprising the following steps: coating the surface of the substrate with the coating solution, followed by a sintering treatment, wherein the sheet temperature during the sintering treatment is 800-900°C. In the present invention, the sheet temperature is the temperature of the substrate surface.

In the method for manufacturing the oriented silicon steel sheet described in the present invention, the sheet temperature during the sintering treatment is controlled between 800-900°C for the following reasons: If the sheet temperature during the sintering treatment is below 800°C, the steel sheet is not sufficiently flat, and the tension effect imparted by the coating is not significant; whereas if the sheet temperature during the sintering treatment is higher than 900°C, the silica in the coating is prone to crystallization, leading to reduced coating denseness and decreased tension effect.

Compared to prior arts, the coating solution for oriented silicon steel, the oriented silicon steel sheet, and the manufacturing method therefor described in the present invention provide the following advantages and beneficial effects: The coating solution of the present invention does not contain harmful metal element chromium, making it more environmentally friendly than chromium-containing coating solutions.

The coating solution described in the present invention is stable in nature and is easy to be applied onto the surface of the silicon steel substrate, facilitating industrial production and use.

The coating of the oriented silicon steel sheet described in the present invention has excellent moisture absorption resistance, tension, corrosion resistance, heat resistance, and anti-sticking property, thereby further enhancing the magnetic property of the oriented silicon steel.

Preferably, the coating of the present invention satisfies the following properties: surface tension > 6 MPa;

phosphorus release amount < 75 $\mu g/150\ cm^2$.

DETAILED DESCRIPTION OF THE EMBODIMENTS

The following will provide further explanation and illustration of the coating solution for oriented silicon steel, the oriented silicon steel sheet, and manufacturing method therefor described in the present invention based on specific embodiments. However, such explanation and illustrations shall not constitute an undue limitation on the technical solutions of the present invention.

**Examples 1-16 and Comparative Examples 1-3**

The oriented silicon steel sheets of Examples 1-16 and Comparative Examples 1-3 were prepared by using the following steps:
(1) Preparation of coating solutions. Table 1 provides the parts by mass and mass ratios of solutes in the coating solutions of Examples 1-16 and in the comparative coating solutions of Comparative Examples 1-3.

Table 1

| Number | First Dihydrogen Phosphate | | Second Dihydrogen Phosphate | | Colloidal Silica | | Total Amount of Dihydrogen Phosphate : SiO$_2$ Content : Copper Dihydrogen Phosphate Content (Mass Ratio) |
|---|---|---|---|---|---|---|---|
| | Type | Parts by Mass | Type | Parts by Mass | Parts by Mass | Particle Diameter (nm) | |
| Example 1 | Magnesium Dihydrogen Phosphate | 95 | Copper Dihydrogen Phosphate | 5 | 100 | 10 | 100:100:5 |
| Example 2 | Magnesium Dihydrogen Phosphate | 90 | Copper Dihydrogen Phosphate | 10 | 100 | 10 | 100:100:10 |
| Example 3 | Magnesium Dihydrogen Phosphate | 88 | Copper Dihydrogen Phosphate | 12 | 100 | 10 | 100:100:12 |
| Example 4 | Magnesium Dihydrogen Phosphate | 85 | Copper Dihydrogen Phosphate | 15 | 100 | 10 | 100:100:15 |
| Example 5 | Magnesium Dihydrogen Phosphate | 80 | Copper Dihydrogen Phosphate | 20 | 100 | 10 | 100:100:20 |
| Example 6 | Magnesium Dihydrogen Phosphate | 75 | Copper Dihydrogen Phosphate | 25 | 100 | 10 | 100:100:25 |
| Example 7 | Magnesium Dihydrogen Phosphate | 88 | Copper Dihydrogen Phosphate | 12 | 50 | 10 | 100:50:12 |
| Example 8 | Magnesium Dihydrogen Phosphate | 88 | Copper Dihydrogen Phosphate | 12 | 80 | 10 | 100:80:12 |

(continued)

| Number | First Dihydrogen Phosphate | | Second Dihydrogen Phosphate | | Colloidal Silica | | Total Amount of Dihydrogen Phosphate : SiO$_2$ Content : Copper Dihydrogen Phosphate Content (Mass Ratio) |
|---|---|---|---|---|---|---|---|
| | Type | Parts by Mass | Type | Parts by Mass | Parts by Mass | Particle Diameter (nm) | |
| Example 9 | Magnesium Dihydrogen Phosphate | 88 | Copper Dihydrogen Phosphate | 12 | 110 | 10 | 100:110:12 |
| Example 10 | Magnesium Dihydrogen Phosphate | 88 | Copper Dihydrogen Phosphate | 12 | 120 | 5 | 100:120:12 |
| Example 11 | Magnesium Dihydrogen Phosphate | 88 | Copper Dihydrogen Phosphate | 12 | 150 | 50 | 100:150:12 |
| Example 12 | Aluminum Dihydrogen Phosphate | 88 | Copper Dihydrogen Phosphate | 12 | 80 | 10 | 100:80:12 |
| Example 13 | 50% Aluminum Dihydrogen Phosphate + 50% Magnesium Dihydrogen Phosphate | 88 | Copper Dihydrogen Phosphate | 12 | 80 | 10 | 100:80:12 |
| Example 14 | 50% Aluminum Dihydrogen Phosphate + 50% Calcium Dihydrogen Phosphate | 88 | Copper Dihydrogen Phosphate | 12 | 80 | 10 | 100:80:12 |
| Example 15 | 50% Magnesium Dihydrogen Phosphate + 50%Zinc Dihydrogen Phosphate | 88 | Copper Dihydrogen Phosphate | 12 | 90 | 10 | 100:90:12 |
| Example 16 | Aluminum Dihydrogen Phosphate | 88 | Copper Dihydrogen Phosphate | 12 | 80 | 5 | 100:80:12 |
| Comparative Example 1 | Aluminum Dihydrogen Phosphate | 100 | - | - | 80 | 10 | 100:80:0 |
| Comparative Example 2 | Aluminum Dihydrogen Phosphate | 96 | Copper Dihydrogen Phosphate | 4 | 80 | 10 | 100:80:4 |
| Comparative Example 3 | Aluminum Dihydrogen Phosphate | 70 | Copper Dihydrogen Phosphate | 30 | 80 | 10 | 100:80:30 |

Certainly, in other embodiments of the present invention, the first dihydrogen phosphate can also be selected from dihydrogen phosphates of Sr, Ba, Ni, and Mn, or mixtures thereof.
(2) The coating solution was applied onto the oriented silicon steel substrate. After the coating solution was cured, the dry film amount per side of the coating on the surface of the substrate was 2-7 g/m$^2$. The same oriented silicon steel substrate was used in all Examples and Comparative Examples of the present invention. Specifically, the substrate composition by mass percentage was as follows: C: 0.045%, Si: 3.32%, S: 0.006%, soluble Al: 0.028%, N: 0.006%, Mn: 0.015%, with the balance being Fe and other inevitable impurities.

It should be noted that in the present invention, the surface of the substrate optionally has a magnesium silicate underlayer. If a magnesium silicate underlayer is present, the coating solution is applied onto the magnesium silicate underlayer.

(3) Sintering treatment was conducted, wherein the sheet temperature during sintering treatment was 800-900°C, and the sintering time was 20 seconds or more. In practical operations, the sintering time is typically 40 seconds or less due to considerations of manufacturing process costs.

Table 2 lists the content of phosphates and the element Cu in the coatings of Examples 1-16 and Comparative Examples 1-3.

Table 2

| Number | First Phosphate | Second Phosphate | Content of Phosphates in Coating (wt%) | Content of Cu element in Coating (wt%) |
|---|---|---|---|---|
| Example 1 | Magnesium Phosphate | Copper Phosphate | 50.00% | 0.89% |
| Example 2 | Magnesium Phosphate | Copper Phosphate | 50.00% | 1.32% |
| Example 3 | Magnesium Phosphate | Copper Phosphate | 50.00% | 1.59% |
| Example 4 | Magnesium Phosphate | Copper Phosphate | 50.00% | 1.99% |
| Example 5 | Magnesium Phosphate | Copper Phosphate | 50.00% | 2.65% |
| Example 6 | Magnesium Phosphate | Copper Phosphate | 50.00% | 3.31% |
| Example 7 | Magnesium Phosphate | Copper Phosphate | 66.67% | 2.13% |
| Example 8 | Magnesium Phosphate | Copper Phosphate | 55.56% | 1.77% |
| Example 9 | Magnesium Phosphate | Copper Phosphate | 47.62% | 1.51% |
| Example 10 | Magnesium Phosphate | Copper Phosphate | 45.45% | 1.44% |
| Example 11 | Magnesium Phosphate | Copper Phosphate | 40.00% | 1.27% |
| Example 12 | Aluminum Phosphate | Copper Phosphate | 55.56% | 1.77% |
| Example 13 | 50% Aluminum Phosphate + 50% Magnesium Phosphate | Copper Phosphate | 55.56% | 1.77% |
| Example 14 | 50% Aluminum Phosphate + 50% Calcium Phosphate | Copper Phosphate | 55.56% | 1.77% |
| Example 15 | 50% Magnesium Phosphate + 50% Zinc Phosphate | Copper Phosphate | 52.63% | 1.67% |
| Example 16 | Aluminum Phosphate | Copper Phosphate | 55.56% | 1.77% |
| Comparative Example 1 | Aluminum Phosphate | - | 55.56% | 0.00% |

(continued)

| Number | First Phosphate | Second Phosphate | Content of Phosphates in Coating (wt%) | Content of Cu element in Coating (wt%) |
|---|---|---|---|---|
| Comparative Example 2 | Aluminum Phosphate | Copper Phosphate | 55.56% | 0.59% |
| Comparative Example 3 | Aluminum Phosphate | Copper Phosphate | 55.56% | 4.42% |

Table 3 provides the specific process parameters, the thicknesses of the silicon steel substrates, and the dry film amounts per side on the surfaces of the obtained oriented silicon steel sheets used for the manufacture of the oriented silicon steel sheets of Examples 1-16 and Comparative Examples 1-3.

Table 3

|  | Thickness of Substrate (mm) | Sintering Temperature (°C) | Sintering Time (s) | Dry Film Amount per Side (g/m$^2$) |
|---|---|---|---|---|
| Example 1 | 0.23 | 800 | 50 | 4.8 |
| Example 2 | 0.23 | 850 | 30 | 4.5 |
| Example 3 | 0.23 | 880 | 20 | 4.6 |
| Example 4 | 0.23 | 850 | 30 | 4.5 |
| Example 5 | 0.23 | 850 | 30 | 4.1 |
| Example 6 | 0.23 | 800 | 30 | 7.0 |
| Example 7 | 0.23 | 830 | 30 | 4.5 |
| Example 8 | 0.23 | 850 | 30 | 4.8 |
| Example 9 | 0.23 | 870 | 30 | 4.7 |
| Example 10 | 0.23 | 880 | 30 | 4.3 |
| Example 11 | 0.23 | 900 | 30 | 4.0 |
| Example 12 | 0.23 | 850 | 30 | 4.8 |
| Example 13 | 0.23 | 850 | 30 | 4.5 |
| Example 14 | 0.20 | 850 | 30 | 5.8 |
| Example 15 | 0.27 | 850 | 30 | 5.2 |
| Example 16 | 0.30 | 850 | 30 | 2.0 |
| Comparative Example 1 | 0.23 | 850 | 30 | 4.9 |
| Comparative Example 2 | 0.23 | 850 | 30 | 4.5 |
| Comparative Example 3 | 0.23 | 850 | 30 | 4.6 |

Performance tests were conducted for the oriented silicon steel sheets obtained from Examples 1-16 and Comparative Examples 1-3. These performance tests included tests of coating tension, moisture absorption resistance, heat resistance, corrosion resistance, anti-sticking property, magnetic induction, and iron loss. The test results are provided in Table 4. The specific testing method is as follows:

(1) Coating tension $\sigma$: With the rolling direction as the longitudinal direction, the oriented silicon steel sheet was cut into a specimen sheet of 300 mm in length $\times$ 30 mm in width. Then the coating was removed, and the specimen sheet was bent to measure its warpage amount, and the coating tension $\sigma$ was calculated using the following formula:

$$\sigma \approx \frac{E \times t \times H}{L^2} \times 1000$$

wherein $\sigma$ represents the coating tension, in MPa; E represents the Young's modulus of the steel sheet, in GPa; t represents the thickness of the steel sheet, in mm; H represents warpage amount, in mm; L represents the length of the steel sheet, in mm.

(2) Moisture absorption resistance: The oriented silicon steel sheet was boiled in pure water at 100°C for 30 minutes. Then the amount of phosphorus released from the coating per unit area was determined by quantitative analysis (using fluorescence analysis or ICP), in $\mu g/150 \, cm^2$.

(3) Heat resistance: The degree of tension degradation and insulation property degradation of the surface coating were determined after stress relief annealing treatment. The process conditions of the stress relief annealing treatment were: holding at 850°C for 4 hours under a 100% $N_2$ atmosphere.

Heat resistance was graded into four levels: "Excellent" (reduction in tension and insulation < 20%), "Good" (20% $\leq$ reduction in tension and insulation < 30%), "Fair" (30% $\leq$ reduction in tension and insulation < 40%), and "Poor" (reduction in tension and insulation $\geq$ 40%).

(4) Corrosion resistance: The corrosion resistance of the coating was evaluated by a salt spray test. The salt spray test solution was a 5 wt% NaCl solution, the testing temperature was 35°C, and the testing time was 10 hours. Corrosion resistance was graded into four levels: "Excellent" (corrosion area < 5%), "Good" (5% $\leq$ corrosion area < 10%), "Fair" (10% $\leq$ corrosion area < 30%), and "Poor" (corrosion area $\geq$ 30%).

(5) Anti-sticking property: Oriented silicon steel sheets with the same size were stacked and then subjected to 80 $kg/cm^2$ pressure, which was applied perpendicular to the sheet surface. Heat treatment was conducted at 850°C for 4 hours under $N_2$ atmosphere with a dew point of 10°C. The anti-sticking property of the coating was evaluated by determining the average peeling force F between every two oriented silicon steel sheets. Lower peeling force indicates superior anti-sticking property. Anti-sticking property was graded into four levels: "Excellent" (F < 100 $g/m^2$), "Good" (100 $\leq$ F < 250 $g/m^2$), "Fair" (250 $\leq$ F < 500 $g/m^2$), and "Poor" (F $\geq$ 500 $g/m^2$).

(6) Magnetic induction: Magnetic induction was represented as $B_8$ (magnetic flux density at a magnetic field of 800 A/m), and tested in accordance with GB/T 3655-2022.

(7) Iron loss: Iron loss was represented as $P_{15/50}$ (iron loss at a frequency of 50 Hz and a maximum magnetic induction of 1.5 T), and tested in accordance with GB/T 3655-2022.

Table 4 provides the relevant test results of performances of the oriented silicon steel sheets of Examples 1-16 and Comparative Examples 1-3.

Table 4

|  | Coating Tension (MPa) | Phosphorus Release Amount ($\mu g/150 \, cm^2$) | Heat Resistance | Corrosion Resistance | Anti-Sticking Property | $B_8$ (T) | $P_{15/50}$ (w/kg) |
|---|---|---|---|---|---|---|---|
| Example 1 | 6.9 | 65 | Excellent | Excellent | Good | 1.914 | 0.797 |
| Example 2 | 7.5 | 56 | Excellent | Excellent | Excellent | 1.908 | 0.789 |
| Example 3 | 8.3 | 35 | Excellent | Excellent | Excellent | 1.915 | 0.783 |
| Example 4 | 7.6 | 34 | Excellent | Excellent | Excellent | 1.912 | 0.787 |
| Example 5 | 7.2 | 23 | Excellent | Excellent | Excellent | 1.916 | 0.791 |
| Example 6 | 6.9 | 21 | Excellent | Excellent | Excellent | 1.909 | 0.792 |
| Example 7 | 6.2 | 51 | Excellent | Excellent | Excellent | 1.914 | 0.842 |
| Example 8 | 6.9 | 27 | Excellent | Excellent | Excellent | 1.915 | 0.792 |
| Example 9 | 7.1 | 32 | Excellent | Excellent | Excellent | 1.912 | 0.791 |
| Example 10 | 6.8 | 27 | Excellent | Excellent | Excellent | 1.907 | 0.804 |
| Example 11 | 6.5 | 25 | Excellent | Excellent | Excellent | 1.913 | 0.825 |
| Example 12 | 7.8 | 39 | Excellent | Excellent | Excellent | 1.913 | 0.787 |
| Example 13 | 7.9 | 34 | Excellent | Excellent | Excellent | 1.917 | 0.786 |
| Example 14 | 8.5 | 32 | Excellent | Excellent | Excellent | 1.914 | 0.777 |

(continued)

|  | Coating Tension (MPa) | Phosphorus Release Amount ($\mu g/150 \ cm^2$) | Heat Resistance | Corrosion Resistance | Anti-Sticking Property | $B_8$ (T) | $P_{15/50}$ (w/kg) |
|---|---|---|---|---|---|---|---|
| Example 15 | 8.2 | 27 | Excellent | Excellent | Excellent | 1.911 | 0.785 |
| Example 16 | 6.8 | 23 | Excellent | Excellent | Excellent | 1.914 | 0.801 |
| Comparative Example 1 | 4.6 | 360 | Poor | Poor | Poor | 1.912 | 0.826 |
| Comparative Example 2 | 6.2 | 120 | Excellent | Poor | Poor | 1.909 | 0.813 |
| Comparative Example 3 | 6.5 | 20 | Poor | Excellent | Excellent | 1.907 | 0.804 |

It can be seen from Table 4 that the coatings of the oriented silicon steel sheets of Examples 1-16 of the present invention exhibit excellent tension effects with a tension range of 6.2 to 8.5 MPa. The phosphorus release amounts characterizing moisture absorption resistance are < 75 $\mu g/150 \ cm^2$. Additionally, these coatings possess superior heat resistance, corrosion resistance, and anti-sticking property. Consequently, the Examples of the present invention exhibited superior magnetic property compared to Comparative Examples 1-3.

In contrast, Comparative Example 1, which did not use the coating solution containing copper dihydrogen phosphate, demonstrates inferior tension, moisture absorption resistance, heat resistance, corrosion resistance, and anti-sticking property.

Both Comparative Examples 2 and 3 used a coating solution containing copper dihydrogen phosphate. Therefore, they exhibited significantly superior tension and moisture absorption resistance compared to Comparative Example 1.

However, the content of copper dihydrogen phosphate in Comparative Example 2 was below the range defined in the present invention, while the content of copper dihydrogen phosphate in Comparative Example 3 was higher than the range defined in the present invention. Consequently, they exhibited inferior tension, moisture absorption resistance, heat resistance, corrosion resistance, and anti-sticking property compared to Examples 1-16 of the present invention.

It should be noted that the combination of technical features in the present application is not limited to the combinations described in the claims or in the specific embodiments. All technical features described in the present application can be freely combined or integrated in any manner, provided that they do not conflict with each other.

It should also be noted that the embodiments provided above are merely specific implementations of the present invention. Obviously, the invention is not limited to the above embodiments. Similar modifications or variations that can be directly derived or readily conceived by those skilled in the art from the disclosure of the present invention should fall within the protection scope of the present invention.

**Claims**

1.  A coating solution for oriented silicon steel, wherein the coating solution contains: a first dihydrogen phosphate, a second dihydrogen phosphate, and colloidal silica;

    wherein the first dihydrogen phosphate is at least one selected from dihydrogen phosphates of Al, Mg, Ca, Sr, Ba, Zn, Ni, and Mn;
    the second dihydrogen phosphate comprises copper dihydrogen phosphate; and
    the coating solution does not contain Cr.

2.  The coating solution according to claim 1, wherein solutes of the coating solution consist of: the first dihydrogen phosphate, the second dihydrogen phosphate, and the colloidal silica;

    wherein the first dihydrogen phosphate is at least one selected from dihydrogen phosphates of Al, Mg, Ca, Sr, Ba, Zn, Ni, and Mn;
    the second dihydrogen phosphate comprises copper dihydrogen phosphate; and
    optionally, the coating solution uses water as its solvent.

3. The coating solution according to claim 1 or 2, wherein the first dihydrogen phosphate is at least one selected from dihydrogen phosphates of Al, Mg, Ca, Zn, and Mn.

4. The coating solution according to claim 1 or 2, wherein the first dihydrogen phosphate is at least one selected from magnesium dihydrogen phosphate, aluminum dihydrogen phosphate, calcium dihydrogen phosphate, zinc dihydrogen phosphate, and manganese dihydrogen phosphate.

5. The coating solution according to claim 1 or 2, wherein a mass ratio of an amount of the colloidal silica to a total amount of the first dihydrogen phosphate and the second dihydrogen phosphate is 0.5 to 1.5, preferably 0.8 to 1.2.

6. The coating solution according to claim 1 or 2, wherein a mass ratio of an amount of the copper dihydrogen phosphate to a total amount of the first dihydrogen phosphate and the second dihydrogen phosphate is 0.05 to 0.25, preferably 0.1 to 0.15.

7. The coating solution according to claim 1 or 2, wherein a particle diameter of the colloidal silica is 5-50 nm, preferably 5-10 nm.

8. An oriented silicon steel sheet, comprising a substrate and a coating on a surface of the substrate, wherein the coating is formed from the coating solution according to any one of claims 1-7, the coating has a network or chain-like structure; the coating contains a first phosphate, a second phosphate, and silica;

   wherein the first phosphate is at least one selected from phosphates of Al, Mg, Ca, Sr, Ba, Zn, Ni, and Mn;
   the second phosphate comprises a phosphate of Cu; and
   the coating does not contain Cr.

9. The oriented silicon steel sheet according to claim 8, wherein the first phosphate and the second phosphate account for 34-73% of a total mass of the coating.

10. The oriented silicon steel sheet according to claim 8, wherein Cu element accounts for 0.8-4.0% of a total mass of the coating.

11. The oriented silicon steel sheet according to claim 8, wherein the surface of the substrate comprises a magnesium silicate underlayer, and the coating is formed on the magnesium silicate underlayer.

12. The oriented silicon steel sheet according to claim 8, wherein the coating satisfies: coating tension > 6 MPa; phosphorus release amount < 75 $\mu$g/150 cm$^2$.

13. The oriented silicon steel sheet according to claim 8, wherein a dry film amount per side of the coating is 2-7 g/m$^2$.

14. A method for manufacturing the oriented silicon steel sheet according to any one of claims 8-13, wherein the method comprises the following steps: coating the surface of the substrate with the coating solution, and subjecting the coating solution to a sintering treatment, wherein a sheet temperature during the sintering treatment is 800-900°C.

## INTERNATIONAL SEARCH REPORT

| International application No. |
|---|
| **PCT/CN2024/118028** |

### A. CLASSIFICATION OF SUBJECT MATTER

C09D 1/00(2006.01)i; C23C 22/00(2006.01)i; C23C 22/05(2006.01)i; C23C 22/08(2006.01)i

According to International Patent Classification (IPC) or to both national classification and IPC

### B. FIELDS SEARCHED

Minimum documentation searched (classification system followed by classification symbols)

IPC: C09D1/-,C23C22/-

Documentation searched other than minimum documentation to the extent that such documents are included in the fields searched

Electronic data base consulted during the international search (name of data base and, where practicable, search terms used)

CNTXT, ENTXTC, WPABS, DWPI, ISI Web of Science, STN, 中国期刊网全文数据库, China Journal Network Full-text Database (CJFD): 宝山钢铁股份有限公司, 吉亚明, 李国保, 杨勇杰, 赵自鹏, 凌晨, 吴美洪, 马长松, 郭建国, 取向, 方向, 钢, 铬, 胶体二氧化硅, 氧化硅, 磷酸, 磷酸二氢, 磷酸盐, 磷酸二氢铜, 磷酸二氢盐, 重磷酸, 铜, 硅, Cr, Cu, SiO2, H2CuPO4, H2CuO4P, orient+, direction, steel, chromium, colloidal silicon +oxide, phosphoric acid, dihydrogen phosphate, phosphate, copper dihydrogen phosphate, dihydrogen phosphate, heavy phosphoric acid, copper, silicon

### C. DOCUMENTS CONSIDERED TO BE RELEVANT

| Category* | Citation of document, with indication, where appropriate, of the relevant passages | Relevant to claim No. |
|---|---|---|
| X | US 2002098345 A1 (TOYO BOSEKI K.K. et al.) 25 July 2002 (2002-07-25) description, paragraphs 9-13, 24, 32, 53, 118, 123, and 172 | 1-5, 7-9, 11-14 |
| A | CN 101135049 A (BAOSHAN IRON & STEEL CO., LTD.) 05 March 2008 (2008-03-05) description, page 2, paragraph 6-page 3, paragraph 5 | 1-14 |
| A | CN 114555860 A (JFE STEEL CORP.) 27 May 2022 (2022-05-27) description, paragraphs [0013]-[0026] | 1-14 |
| A | JP 2017101292 A (JFE STEEL CORP.) 08 June 2017 (2017-06-08) description, abstract | 1-14 |
| A | US 1887967 A (PARKER RUST PROOF CO.) 15 November 1932 (1932-11-15) description, page 1, left column, line 47-page 2, left column, line 65 | 1-14 |
| A | CN 112831200 A (NANJING BAOCHUN NEW MATERIAL TECHNOLOGY CO., LTD.) 25 May 2021 (2021-05-25) description, paragraphs 13-22 | 1-14 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **11 December 2024** | **18 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/118028**

| Patent document cited in search report | | | Publication date (day/month/year) | Patent family member(s) | | | Publication date (day/month/year) |
|---|---|---|---|---|---|---|---|
| US | 2002098345 | A1 | 25 July 2002 | KR | 19990083391 | A | 25 November 1999 |
| | | | | KR | 100570490 | B1 | 13 April 2006 |
| | | | | US | 6589324 | B2 | 08 July 2003 |
| | | | | DE | 69905640 | D1 | 10 April 2003 |
| | | | | DE | 69905640 | T2 | 16 October 2003 |
| | | | | EP | 0952193 | A1 | 27 October 1999 |
| | | | | EP | 0952193 | B1 | 05 March 2003 |
| CN | 101135049 | A | 05 March 2008 | CN | 100567570 | C | 09 December 2009 |
| CN | 114555860 | A | 27 May 2022 | EP | 4026930 | A1 | 13 July 2022 |
| | | | | EP | 4026930 | A4 | 26 October 2022 |
| | | | | JP | 6863534 | B1 | 21 April 2021 |
| | | | | JPWO | 2021084793 | A1 | 06 May 2021 |
| | | | | US | 2024102172 | A1 | 28 March 2024 |
| | | | | US | 12104257 | B2 | 01 October 2024 |
| | | | | KR | 20220065863 | A | 20 May 2022 |
| | | | | MX | 2022004763 | A | 16 May 2022 |
| | | | | CA | 3151419 | A1 | 06 May 2021 |
| | | | | CA | 3151419 | C | 09 January 2024 |
| | | | | CN | 114555860 | B | 18 June 2024 |
| JP | 2017101292 | A | 08 June 2017 | JP | 6455414 | B2 | 23 January 2019 |
| US | 1887967 | A | 15 November 1932 | FR | 680946 | A | 07 May 1930 |
| | | | | GB | 346401 | A | 10 April 1931 |
| | | | | DE | 641750 | C | 12 February 1937 |
| | | | | BE | 366558 | A | 31 January 1930 |
| CN | 112831200 | A | 25 May 2021 | None | | | |

**EP 4 752 176 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 48039338 A
- CN 107923046 A
- CN 104024474 A